# EUROPEAN PATENT APPLICATION

(11) **EP 4 191 483 A1**
(43) Date of publication of application: **07.06.2023**
(21) Application number: 21855629.8
(22) Date of filing: 13.08.2021
(51) Int. Cl.: G06N 20/00

(54) **FEDERATED LEARNING METHOD, DEVICE AND SYSTEM**

(30) Priority: 13.08.2020 CN 202010813898
(71) Applicant: Huawei Technologies Co., Ltd., Shenzhen, Guangdong 518129 (CN)
(72) Inventor: SONG, Tao, Shanghai 200240 (CN); GUO, Hanxi, Shanghai 200240 (CN); MA, Ruhui, Shanghai 200240 (CN); GUAN, Haibing, Shanghai 200240 (CN); JIN, Xiulang, Shenzhen, Guangdong 518129 (CN)
(74) Representative: Gill Jennings & Every LLP
(86) International application number: PCT/CN2021/112467
(87) International publication number: WO 2022/033579

(57) **Abstract**

A federated learning method, device, and system are provided, to improve robustness of the federated learning system. The method includes: A first client receives a first value of a parameter of a machine learning model from a server, where the first client is one of a plurality of clients; when the first value of the parameter does not meet a first condition, the first client performs a current round of training based on first training data, the machine learning model, and a local value of the parameter, to obtain a training result of the current round of training, where the first training data is data reserved on the first client; and the first client sends the training result and alarm information to the server, where the alarm information indicates that the first value of the parameter does not meet a requirement.

## Description

This application claims priority to Chinese Patent Application No. 202010813898.X, filed with the China National Intellectual Property Administration on August 13, 2020, and entitled "FEDERATED LEARNING METHOD, DEVICE, AND SYSTEM", which is incorporated herein by reference in its entirety.

### TECHNICAL FIELD

Embodiments of this application relate to the field of machine learning technologies, and in particular, to a federated learning method, device, and system.

### BACKGROUND

As a machine learning technology, a federated learning technology can be used to resolve a problem of an isolated data island while protecting privacy and complying with a data usage specification in the industry.

The federated learning system used for federated learning includes a server and a plurality of clients. In a federated learning process, the server sends a model parameter of a current round of training to each client. The client locally performs the current round of training based on the model parameter of the current round of training, and sends a training result to the server. The server determines a model parameter of a next round of training based on the training result of each client, and sends the model parameter to each client, to perform the next round of training.

However, if the federated learning system suffers a Byzantine attack (Byzantine attack), that is, an attacker controls one or more clients to send malicious data to the server, the server delivers incorrect data to all the clients. Consequently, the client performs training based on the incorrect data. This is equivalent to indirectly attacking all the clients.

To cope with the Byzantine attack, a corresponding defense strategy is generally configured in the federated learning system. However, an existing defense strategy causes poor robustness of the federated learning system.

### SUMMARY

Embodiments of this application provide a federated learning method, device, and system, to improve robustness of the federated learning system.

A first aspect of the embodiments of this application provides a federated learning method, applied to a federated learning system, where the federated learning system includes a server and a plurality of clients, a same machine learning model is deployed on the plurality of clients, and the method includes: A first client receives a first value of a parameter of the machine learning model from the server, where the first client is one of the plurality of clients; when the first value of the parameter does not meet a first condition, the first client performs a current round of training based on first training data, the machine learning model, and a local value of the parameter, to obtain a training result of the current round of training, where the first training data is data reserved on the first client; and the first client sends the training result of the current round of training and alarm information to the server, where the alarm information indicates that the first value of the parameter does not meet a requirement.

When the first value of the parameter meets the first condition, the first client trains the machine learning model based on the first value of the parameter. When the first value of the parameter does not meet the first condition, the first client trains the machine learning model based on the local value of the parameter. Therefore, in this embodiment of this application, the abnormal first value that is of the parameter and that is delivered by the server can be identified, to avoid training the learning model by using the abnormal first value of the parameter, and the first client performs training by using the local value of the parameter, so that accuracy of the training result can be ensured.

In an implementation, the local value of the parameter is equal to a value that is of the parameter and that is obtained in a previous round of training.

When the first value of the parameter does not meet the first condition, the first client trains the machine learning model based on the value that is of the parameter and that is obtained in the previous round of training, so that the obtained training result makes the machine learning model have a better performance.

In an implementation, the local value of the parameter is equal to an average value of values that are of the parameter and that are obtained in two rounds of training before the current round of training.

When the first value of the parameter does not meet the first condition, the first client trains the machine learning model based on the average value of the values that are of the parameter and that are obtained in the two rounds of training before the current round of training, so that the obtained training result makes the machine learning model have a better performance.

In an implementation, the training result of the current round of training is a value that is of the parameter and that is obtained in the current round of training, or a difference between a value that is of the parameter and that is obtained in the current round of training and the local value of the parameter.

This implementation provides two forms of the training result.

In an implementation, the training result of the current round of training is a difference between the local value of the parameter and a value that is of the parameter and that is obtained in the current round of training.

This implementation provides another form of the training result.

In an implementation, the training result of the current round of training is an absolute value of a difference between a value that is of the parameter and that is obtained in the current round of training and the local value of the parameter.

This implementation provides another form of the training result.

In an implementation, after the first client receives the first value of the parameter from the server, and before the first client performs the current round of training based on the first training data, the machine learning model, and the local value of the parameter when the first value of the parameter does not meet the first condition, to obtain the training result of the current round of training, the method further includes: The first client determines, based on the first training data and the machine learning model, that the first value of the parameter does not meet the first condition.

In this implementation, the first client determines that the first value of the parameter does not meet the first condition.

In an implementation, that the first client determines, based on the first training data and the machine learning model, that the first value of the parameter does not meet the first condition includes: The first client calculates a first actual value of a performance of the machine learning model based on the first training data and the first value of the parameter; and the first client determines, based on the first actual value of the performance of the machine learning model and a first target value of the performance of the machine learning model, that the first value of the parameter does not meet the first condition.

The first client determines, based on the first actual value of the performance of the machine learning model and the first target value of the performance of the machine learning model, that the first value of the parameter does not meet the first condition, to avoid performing training by using a value of the parameter that makes the machine learning model have a specific poor performance, that is, to ensure that training is performed by using a value that is of the parameter and that makes the machine learning model have a specific good performance, so that a final performance of the machine learning model can be improved.

In an implementation, a first target value of a performance of the machine learning model is a value that is of the performance of the machine learning model and that is obtained after a previous round of training is performed, or a maximum value that is of the performance of the machine learning model and that is obtained after all rounds of training are performed before the current round of training.

This implementation provides a plurality of choices for the first target value.

In an implementation, the first condition is that a difference between the first target value of the performance of the machine learning model and the first actual value of the performance of the machine learning model is less than or equal to a first threshold.

Based on the foregoing first condition, training may be prevented from being performed by using the first value that is of the parameter and that makes the machine learning model have a specific poor performance, that is, it is ensured that training is performed by using a value that is of the parameter and that makes the machine learning model have a specific good performance, so that a final performance of the machine learning model can be improved.

In an implementation, the first condition is that an absolute value of a difference between the first value of the parameter and a preset value of the parameter is less than a third threshold.

Based on the foregoing first condition, training may be prevented from being performed by using the abnormal first value of the parameter.

In an implementation, the performance of the machine learning model includes at least one of accuracy, precision, a recall rate, and an F1 score.

This implementation provides a plurality of choices for the performance of the machine learning model.

A second aspect of the embodiments of this application provides a federated learning method, applied to a federated learning system, where the federated learning system includes a server and a plurality of clients, a machine learning model is deployed on the plurality of clients, and the method includes: The server separately sends a first value of a parameter of the machine learning model to the plurality of clients, where the first value of the parameter is used for a current round of training of the machine learning model; the server receives a training result of the current round of training from each of the plurality of clients; the server obtains, when at least one client of the plurality of clients further reports an alarm signal, a training result by screening the training results of the current round of training from the plurality of clients, where the alarm information indicates that the first value of the parameter does not meet a first condition; and the server calculates a third value of the parameter based on the training result obtained through screening, where the third value of the parameter is used for a next round of training of the machine learning model.

When at least one client of the plurality of clients further reports the alarm signal, the server screens the training results of the current round of training from the plurality of clients, and determines the third value of the parameter for the next round of training based on the training result obtained through screening, to avoid determining the third value of the parameter by using an abnormal training result, and ensure accuracy of the third value of the parameter.

In an implementation, the training result of the current round of training is a value that is of the parameter and that is obtained in the current round of training, or a difference between a value that is of the parameter and that is obtained in the current round of training and a local value of the parameter.

This implementation provides two forms of the training result.

In an implementation, the training result of the current round of training is a difference between a local value of the parameter and a value that is of the parameter and that is obtained in the current round of training.

This implementation provides another form of the training result.

In an implementation, the training result of the current round of training is an absolute value of a difference between a value that is of the parameter and that is obtained in the current round of training and a local value of the parameter.

In an implementation, that the server obtains, when at least one client of the plurality of clients further reports an alarm signal, a training result by screening the training results of the current round of training from the plurality of clients includes: When at least one client of the plurality of clients further reports the alarm signal, the server calculates a second actual value of a performance of the machine learning model of each of the plurality of clients based on second training data and the training result of the current round of training from each of the plurality of clients, where the second actual value of the performance of the machine learning model is a value that is of the performance of the machine learning model and that is obtained after the current round of training is performed, and the second training data is data reserved on the server; and the server obtains, by screening the training results of the current round of training from the plurality of clients based on the second actual value of the performance of the machine learning model of each of the plurality of clients and a second target value of the performance of the machine learning model, a training result that meets a second condition.

The server obtains, by screening the training results of the current round of training from the plurality of clients based on the second actual value of the performance of the machine learning model of each of the plurality of clients and the second target value of the performance of the machine learning model, the training result that meets the second condition. In this way, a third value that is of the parameter and that is determined based on the training result that is obtained through screening and that meets the second condition can make the machine learning model have a good performance.

In an implementation, the second target value of the performance of the machine learning model is a maximum value that is of the performances of the machine learning models of the plurality of clients and that is obtained after all rounds of training are performed before the current round of training; or the second target value of the performance of the machine learning model is a maximum value of the second actual values of the performances of the machine learning models of the plurality of clients.

This implementation provides a plurality of choices for the second target value of the performance.

In an implementation, the second condition is that a second actual value of the performance of the machine learning model of a second client is greater than a second target value of the performance of the machine learning model or a second difference is less than a second threshold, where the second difference is equal to a difference between the second target value of the performance of the machine learning model and the second actual value of the performance of the machine learning model of the second client, and the second client is any one of the plurality of clients.

This implementation provides a plurality of choices for the second condition. In an implementation, all of training results of clients that report the alarm signal meet the second condition, and a maximum value of a second actual value that is of the performance of the machine learning model and that is calculated based on the training result of the client that reports the alarm signal is greater than a maximum value of a second actual value that is of the performance of the machine learning model and that is calculated based on a training result of a client that does not report the alarm signal.

That the server calculates a third value of the parameter based on the training result obtained through screening includes: The server determines the third value of the parameter based on the training result that is of the client that reports the alarm signal and that is in the training result obtained through screening.

When only some clients identify that the first value of the parameter is abnormal, and send the alarm signal, the server determines the third value of the parameter based on the training result that is of the client that reports the alarm signal and that is in the training result obtained through screening. In this manner, the determined third value of the parameter makes the machine learning model have a better performance, so that fast convergence of the machine learning model can be accelerated.

In an implementation, all of training results of clients that report the alarm signal meet the second condition, and a maximum value of a second actual value that is of the performance of the machine learning model and that is calculated based on the training result of the client that reports the alarm signal is less than a maximum value of a second actual value that is of the performance of the machine learning model and that is calculated based on a training result of a client that does not report the alarm signal.

That the server calculates a third value of the parameter based on the training result obtained through screening includes: The server determines the third value of the parameter based on the training result that is of the client that does not report the alarm signal and that is in the training result obtained through screening.

The training result of the client that reports the alarm signal may be a malicious training result sent by an attacked client, and the second actual value that is of the performance of the machine learning model and that is obtained based on the training result of the client that does not report the alarm signal is high. Therefore, in this embodiment of this application, the server determines the third value of the parameter based on the training result that is of the client that does not report the alarm signal and that is in the training result obtained through screening. In this manner, the determined third value of the parameter makes the machine learning model have a better performance, so that fast convergence of the machine learning model can be accelerated.

In an implementation, some of training results of clients that report the alarm signal meet the second condition.

That the server calculates a third value of the parameter based on the training result obtained through screening includes: The server determines the third value of the parameter based on the training result that is of the client that reports the alarm signal and that is in the training result obtained through screening.

When some of the training results that are of the clients that report the alarm signal and that are in the training results of the plurality of clients meet the second condition, the server determines the third value of the parameter based on the training result that is of the client that reports the alarm signal and that is in the training result obtained through screening. In this way, the determined third value of the parameter makes the machine learning model have a better performance, so that fast convergence of the machine learning model can be accelerated.

In an implementation, the method further includes: In M rounds of training including the current round of training, if a training result of a third client is not included in the training result obtained through screening, the server obtains, through screening, the training result only from a training result of another client other than the third client in the plurality of clients in N rounds of training after the current round of training, where the third client is any one of the plurality of clients, and both M and N are positive integers.

By the current round of training, the training result of the third client in the M rounds of training that have been performed is not included in the training result obtained through screening. Therefore, the server obtains, through screening, the training result only from the training result of the another client other than the third client in the plurality of clients in the N rounds of training after the current round of training. In this way, the server does not determine the value of the parameter by using the training result of the third client, so that special processing is performed on a client whose training result is abnormal for a plurality of times, to avoid processing the abnormal training result of the third client in each round of training.

A third aspect of the embodiments of this application provides a federated learning apparatus, applied to a federated learning system, where the federated learning system includes a server and a plurality of clients, a same machine learning model is deployed on the plurality of clients, and the federated learning apparatus is included in one of the plurality of clients, and includes:
a receiving unit, configured to receive a first value of a parameter of the machine learning model from the server;
a training unit, configured to: when the first value of the parameter does not meet a first condition, perform a current round of training based on first training data, the machine learning model, and a local value of the parameter, to obtain a training result of the current round of training, where the first training data is data reserved on the first client; and
a sending unit, configured to send the training result and alarm information to the server, where the alarm information indicates that the first value of the parameter does not meet a requirement.

In an implementation, the local value of the parameter is equal to a value that is of the parameter and that is obtained in a previous round of training.

In an implementation, the training result of the current round of training is a value that is of the parameter and that is obtained in the current round of training, or a difference between a value that is of the parameter and that is obtained in the current round of training and the local value of the parameter.

In an implementation, the federated learning apparatus further includes a determining unit, configured to determine, based on the first training data and the machine learning model, that the first value of the parameter does not meet the first condition.

In an implementation, the determining unit is configured to: calculate a first actual value of a performance of the machine learning model based on the first training data and the first value of the parameter; and
determine, based on the first actual value of the performance of the machine learning model and a first target value of the performance of the machine learning model, that the first value of the parameter does not meet the first condition.

In an implementation, a first target value of a performance of the machine learning model is a value that is of the performance of the machine learning model and that is obtained after a previous round of training is performed, or a maximum value that is of the performance of the machine learning model and that is obtained after all rounds of training are performed before the current round of training.

In an implementation, the first condition is that a difference between the first target value of the performance of the machine learning model and the first actual value of the performance of the machine learning model is less than or equal to a first threshold.

In an implementation, the performance of the machine learning model includes at least one of accuracy, precision, a recall rate, and an F1 score.

For specific implementation, related descriptions, and technical effects of the foregoing units, refer to the descriptions of the first aspect of the embodiments of this application.

A fourth aspect of the embodiments of this application provides a federated learning apparatus, applied to a federated learning system, where the federated learning system includes a server and a plurality of clients, a same machine learning model is deployed on the plurality of clients, and the federated learning apparatus is included in the server, and includes:
a sending unit, configured to separately send a first value of a parameter of the machine learning model to the plurality of clients, where the first value of the parameter is used for a current round of training of the machine learning model;
a receiving unit, configured to receive a training result of the current round of training from each of the plurality of clients;
a screening unit, configured to obtain, by the server when at least one client of the plurality of clients further reports an alarm signal, a training result by screening the training results of the current round of training from the plurality of clients, where the alarm information indicates that the first value of the parameter does not meet a first condition; and
a calculation unit, configured to calculate a third value of the parameter based on the training result obtained through screening, where the third value of the parameter is used for a next round of training of the machine learning model.

In an implementation, the training result of the current round of training is a value that is of the parameter and that is obtained in the current round of training, or a difference between a value that is of the parameter and that is obtained in the current round of training and a local value of the parameter.

In an implementation, the screening unit is configured to: when at least one client of the plurality of clients further reports the alarm signal, calculate a second actual value of a performance of the machine learning model of each of the plurality of clients based on second training data and the training result of the current round of training from each of the plurality of clients, where the second actual value of the performance of the machine learning model is a value that is of the performance of the machine learning model and that is obtained after the current round of training is performed, and the second training data is data reserved on the server; and
obtain, by screening the training results of the current round of training from the plurality of clients based on the second actual value of the performance of the machine learning model of each of the plurality of clients and a second target value of the performance of the machine learning model, a training result that meets a second condition.

In an implementation, the second target value of the performance of the machine learning model is a maximum value that is of the performances of the machine learning models of the plurality of clients and that is obtained after all rounds of training are performed before the current round of training; or
the second target value of the performance of the machine learning model is a maximum value of the second actual values of the performances of the machine learning models of the plurality of clients.

In an implementation, the second condition is that a second actual value of the performance of the machine learning model of a second client is greater than a second target value of the performance of the machine learning model or a second difference is less than a second threshold, where the second difference is equal to a difference between the second target value of the performance of the machine learning model and the second actual value of the performance of the machine learning model of the second client, and the second client is any one of the plurality of clients.

In an implementation, all of training results of clients that report the alarm signal meet the second condition, and a maximum value of a second actual value that is of the performance of the machine learning model and that is calculated based on the training result of the client that reports the alarm signal is greater than a maximum value of a second actual value that is of the performance of the machine learning model and that is calculated based on a training result of a client that does not report the alarm signal.

The calculation unit is configured to determine the third value of the parameter based on the training result that is of the client that reports the alarm signal and that is in the training result obtained through screening.

In an implementation, all of training results of clients that report the alarm signal meet the second condition, and a maximum value of a second actual value that is of the performance of the machine learning model and that is calculated based on the training result of the client that reports the alarm signal is less than a maximum value of a second actual value that is of the performance of the machine learning model and that is calculated based on a training result of a client that does not report the alarm signal.

The calculation unit is configured to determine the third value of the parameter based on the training result that is of the client that does not report the alarm signal and that is in the training result obtained through screening.

In an implementation, some of training results of clients that report the alarm signal meet the second condition.

The calculation unit is configured to determine the third value of the parameter based on the training result that is of the client that reports the alarm signal and that is in the training result obtained through screening.

In an implementation, the screening unit is further configured to: in M rounds of training including the current round of training, if a training result of a third client is not included in the training result obtained through screening, obtain, through screening, the training result only from a training result of another client other than the third client in the plurality of clients in N rounds of training after the current round of training, where the third client is any one of the plurality of clients, and both M and N are positive integers.

For specific implementation, related descriptions, and technical effects of the foregoing units, refer to the descriptions of the second aspect of the embodiments of this application.

A fifth aspect of the embodiments of this application provides a computer device, including at least one processor and a memory, where the memory stores computer-executable instructions that can be run on the processor, and when the computer-executable instructions are executed by the processor, the processor performs the federated learning method according to any one of the implementations of the first aspect, or performs the federated learning method according to any one of the implementations of the second aspect.

A sixth aspect of the embodiments of this application provides a chip or a chip system, where the chip or the chip system includes at least one processor and a communication interface, the communication interface and the at least one processor are interconnected by using a line, and the at least one processor is configured to run a computer program or instructions, to perform the federated learning method according to any one of the implementations of the first aspect.

A seventh aspect of the embodiments of this application provides a chip or a chip system, where the chip or the chip system includes at least one processor and a communication interface, the communication interface and the at least one processor are interconnected by using a line, and the at least one processor is configured to run a computer program or instructions, to perform the federated learning method according to any one of the implementations of the second aspect.

An eighth aspect of the embodiments of this application provides a computer-readable storage medium that stores one or more computer-executable instructions. When the computer-executable instructions are executed by a processor, the processor performs the federated learning method according to any one of the implementations of the first aspect or the second aspect.

A ninth aspect of the embodiments of this application provides a computer program product, where the computer program product includes computer software instructions, and the computer software instructions may be loaded by a processor to implement the federated learning method according to any one of the implementations of the first aspect or the federated learning method according to any one of the implementations of the second aspect.

A tenth aspect of the embodiments of this application provides a federated learning system, including a server and a plurality of clients, where a same machine learning model is deployed on the plurality of clients;
each client in the plurality of clients is configured to perform the federated learning method according to any one of the implementations of the first aspect; and
the server is configured to perform the federated learning method according to any one of the implementations of the second aspect.

It can be learned from the foregoing technical solutions that embodiments of this application have the following advantages:

The first client receives the first value of the parameter of the machine learning model from the server, where the first client is one of the plurality of clients; when the first value of the parameter does not meet the first condition, the first client performs the current round of training based on the first training data, the machine learning model, and the local value of the parameter, to obtain the training result of the current round of training, where the first training data is data reserved on the first client; and the first client sends the training result and the alarm information to the server, where the alarm information indicates that the first value of the parameter does not meet the requirement. Therefore, in the embodiments of this application, the client can identify the first value that is of the parameter and that does not meet the condition, to avoid training the learning model by using the abnormal first value of the parameter, and the first client performs training by using the local value of the parameter, so that accuracy of the training result can be ensured. In addition, the first client sends the alarm information to the server, to indicate that the first value of the parameter does not meet the condition, so as to assist the server in detection, and prevent all detection tasks from being concentrated on the server. This can improve robustness of the federated learning system.

### BRIEF DESCRIPTION OF DRAWINGS

FIG. 1 is a schematic diagram of an architecture of a federated learning system according to an embodiment of this application;
FIG. 2 is a schematic diagram of an embodiment of a federated learning method according to an embodiment of this application;
FIG. 3 is a schematic diagram of an example of determining that a first value of a parameter does not meet a first condition according to an embodiment of this application;
FIG. 4 is a schematic diagram of an example of obtaining a training result through screening according to an embodiment of this application;
FIG. 5 is a schematic diagram of accuracy of a machine learning model on a server according to an embodiment of this application;
FIG. 6 is a schematic diagram of a quantity of clients that send alarm information in each round of training according to an embodiment of this application;
FIG. 7 is a schematic diagram of a first embodiment of a simulation result according to an embodiment of this application;
FIG. 8 is a schematic diagram of a second embodiment of a simulation result according to an embodiment of this application;
FIG. 9 is a schematic diagram of a structure of a first embodiment of a federated learning apparatus according to an embodiment of this application;
FIG. 10 is a schematic diagram of a structure of a second embodiment of a federated learning apparatus according to an embodiment of this application;
FIG. 11 is a schematic diagram of a structure of a computer device according to an embodiment of this application; and
FIG. 12 is a schematic diagram of a structure of a federated learning system according to an embodiment of this application.

### DESCRIPTION OF EMBODIMENTS

Embodiments of this application provide a federated learning method, device, and system, to improve robustness of the federated learning system.

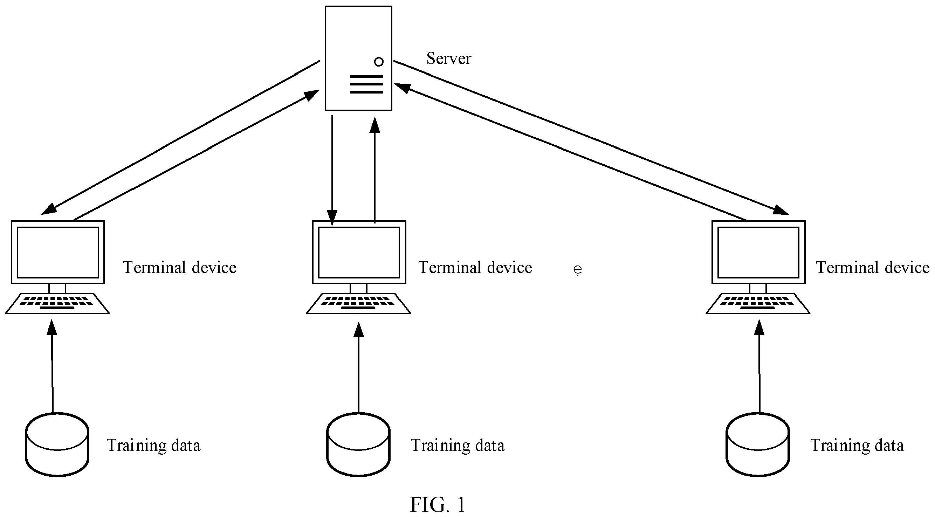

The embodiments of this application may be applied to a federated learning system that includes a plurality of computer devices. Each computer device may be a server, or may be a terminal device. As shown in FIG. 1, the federated learning system may include one server and a plurality of terminal devices. A client (Client) is installed on one of the plurality of computer devices, and a server (Server) is installed on another computer device. The plurality of clients and the server cooperatively train a same machine learning model. A type of the machine learning model is not specifically limited in the embodiments of this application, for example, the machine learning model may be a classification model, a logistic regression model, a tree structure model, and a neural network model.

The following describes the federated learning method by using the federated learning system shown in FIG. 1 as an example.

Specifically, before the first round of training, the server delivers a to-be-trained machine learning model and an initial value of a model parameter to each client. Then, each client performs the first round of training based on local training data, and sends a training result to the server. The server determines a value of the parameter of the second round of training based on the training result of each client, and sends the value of the parameter of the second round of training to each client. Each client performs the second round of training based on local training data.

The foregoing process is repeatedly executed until the machine learning model converges, to complete training of the machine learning model. There may be a plurality of conditions in which the machine learning model converges, for example, the condition may be that a preset quantity of training rounds are completed.

It may be learned from the foregoing descriptions that, in a training process, interaction needs to be performed between the client and the server. Therefore, once an attacked client occurs, the attacked client may send an incorrect training result to the server. As a result, an error occurs in a value that is of the parameter of a next round and that is determined by the server, and the incorrect value of the parameter is sent to all the other clients. Consequently, an error occurs in training on all the clients.

Therefore, to avoid the case, and avoid poor robustness of the federated learning system because only the server detects the training result, the embodiments of this application provide a federated learning method. In this method, a client detects a model parameter delivered by a server in each round of training, and trains a machine learning model in different training manners based on different detection results, so that a problem existing in the model parameter delivered by the server can be identified in a timely manner, to avoid performing training by using an incorrect model parameter. In addition, the client sends the detection result to the server, so that the server can also process a received training result of each client based on the detection result. In this way, a detection task in a training process is mainly executed by the client, and is not concentrated on the server. The server may also perform processing based on the detection result of the client. Therefore, load of the server is reduced, to avoid occupy an excessively large quantity of resources of the server, and resolve a problem of poor robustness of an existing federated learning system. The following specifically describes the federated learning method in the embodiments of this application.

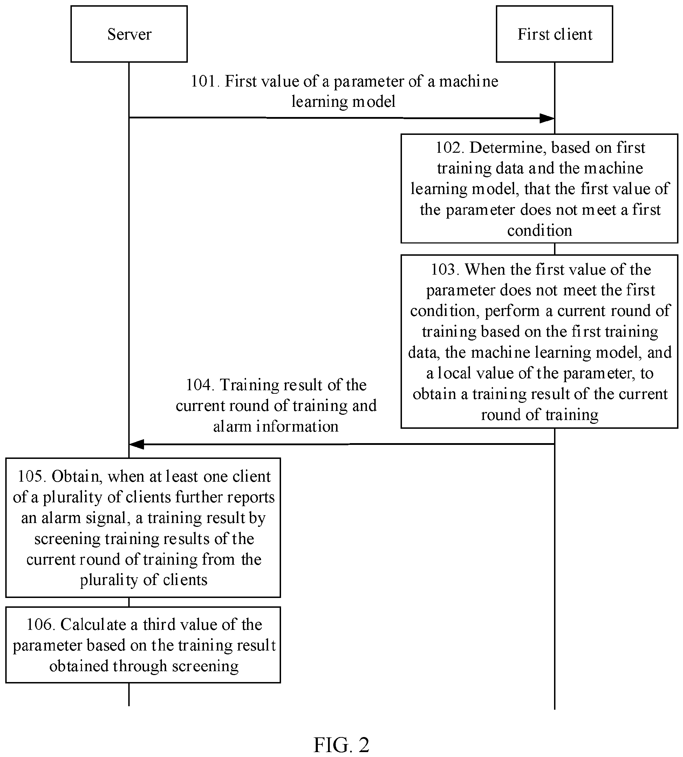

As shown in FIG. 2, an embodiment of this application provides an embodiment of a federated learning method, applied to a federated learning system. The federated learning system includes a server and a plurality of clients, and a same machine learning model is deployed on the plurality of clients.

It may be understood that a quantity of clients in the federated learning system may be adjusted based on an actual requirement. This is not specifically limited in this embodiment of this application.

For the federated learning system and the machine learning model, refer to the related descriptions in FIG. 1.

Based on the federated learning system, the method in this embodiment of this application includes the following steps.

Step 101. The server separately sends a first value of a parameter of the machine learning model to the plurality of clients.

The first value of the parameter is used for a current round of training of the machine learning model. The current round of training may also be referred to as a current round of training. If the current round of training is the first round of training in an entire training process, the first value of the parameter may also be referred to as an initial value of the model parameter.

It should be noted that the model parameter is all parameters included in the machine learning model, and may specifically include a weight (Weights) and a bias.

Correspondingly, each client in the plurality of clients receives the first value of the parameter. Specifically, a first client receives the first value of the parameter from the server. The first client is one of the plurality of clients.

Step 102. The first client determines, based on first training data and the machine learning model, that the first value of the parameter does not meet a first condition.

After receiving the first value of the parameter, the first client detects the first value of the parameter. There are a plurality of detection methods. In this embodiment of this application, the first condition is preset, and it is determined whether the first value of the parameter meets the first condition, to detect the first value of the parameter.

Specific content of the first condition may be set based on an actual requirement. For example, the first condition may be that an absolute value of a difference between the first value of the parameter and a preset value of the parameter is less than a third threshold. Based on a specific example, the following specifically describes the first condition, a case in which the first condition is met, and a case in which the first condition is not met.

It should be understood that in the federated learning system, each client performs training based on local data of the client, so that it can be ensured that the clients do not leak the local data of the clients to each other. Based on this, the first training data is data reserved on the first client, or may be understood as local data of the first client.

It should be noted that, a plurality of methods may be used to determine that the first value of the parameter does not meet the first condition. This is not specifically limited in this embodiment of this application. The following describes a specific method for determining that the first value of the parameter does not meet the first condition.

After the first value of the parameter is detected, if the first value of the parameter meets the first condition, the first client directly performs the current round of training based on the first training data, the machine learning model, and the first value of the parameter.

In this embodiment of this application, step 102 is optional.

Step 103. When the first value of the parameter does not meet the first condition, the first client performs the current round of training based on the first training data, the machine learning model, and a local value of the parameter, to obtain a training result of the current round of training.

It should be noted that the local value of the parameter may be set based on an actual requirement. This is not specifically limited in this embodiment of this application. For example, the local value of the parameter is equal to a value that is of the parameter and that is obtained in a previous round of training. For example, the local value of the parameter is equal to an average value of values that are of the parameter and that are obtained in two rounds of training before the current round of training.

Because the training process is a mature technology, details are not described herein.

After a second value of the model parameter is obtained, the first client may store the second value of the model parameter, to use the second value of the model parameter as the local value of the parameter in a next round of training of the current round of training.

There may be a plurality of forms of the training result. This is not specifically limited in this embodiment of this application. For example, the training result of the current round of training is a value that is of the parameter and that is obtained in the current round of training, or a difference between a value that is of the parameter and that is obtained in the current round of training and the local value of the parameter. For example, the training result of the current round of training is a difference between the local value of the parameter and the value that is of the parameter and that is obtained in the current round of training. For another example, the training result of the current round of training is an absolute value of a difference between the value that is of the parameter and that is obtained in the current round of training and the local value of the parameter.

Step 104. The first client sends the training result of the current round of training and alarm information to the server, where the alarm information indicates that the first value of the parameter does not meet a requirement.

It should be noted that, if the first value of the parameter meets the first condition, when sending the training result to the server, the first client may also send the alarm information. In this case, a value of the alarm information is different from a value that is of the alarm information and that exists when the first value of the parameter does not meet the first condition.

The alarm information existing when the first value of the parameter meets the first condition meets the first condition indicates that the first value of the parameter meets the first condition.

There may also be a plurality of forms of the alarm information. This is not specifically limited in this embodiment of this application. For example, the alarm information may indicate a detection result of the first value of the parameter by using 0 and 1. Specifically, when the value of the alarm information is 1, it indicates that the first value of the parameter does not meet the first condition. When the value of the alarm information is 0, it indicates that the first value of the parameter meets the first condition.

In this embodiment of this application, the first client detects the first value that is of the parameter and that is delivered by the server. When the first value of the parameter meets the first condition, the first client trains the machine learning model based on the first value of the parameter. When the first value of the parameter does not meet the first condition, the first client trains the machine learning model based on the local value of the parameter. Therefore, in this embodiment of this application, the abnormal first value that is of the parameter and that is delivered by the server can be identified, to avoid training the learning model by using the abnormal first value of the parameter, and the first client performs training by using the local value of the parameter, so that accuracy of the training result can be ensured.

Similarly, in the federated learning system, another client other than the first client in the plurality of clients also sends a training result to the server.

Correspondingly, the server receives a training result of the current round of training from each of the plurality of clients.

Step 105. The server obtains, when at least one client of the plurality of clients further reports an alarm signal, a training result by screening the training results of the current round of training from the plurality of clients, where the alarm information indicates that the first value of the parameter does not meet the first condition.

It may be understood that detection results of the first value of the parameter by the plurality of clients include three cases: First, all of the plurality of clients detect that the first value of the parameter meets the first condition. Second, all of the plurality of clients detect that the first value of the parameter does not meet the first condition. Third, some of the plurality of clients detect that the first value of the parameter meets the first condition, and some other of clients detect that the first value of the parameter does not meet the first condition.

Correspondingly, the training results that are of the plurality of clients and that are received by the server also include three cases: First, when sending the training result, the plurality of clients also send the alarm signal. Second, the plurality of clients send only the training result, and do not send the alarm signal. Third, when sending the training result, some of the plurality of clients also send the alarm signal, but some other clients send only the training result.

When at least one client of the plurality of clients further reports the alarm signal, the server detects the training results of the current round of training from the plurality of clients, to detect whether the training result of the current round of training from each client is normal. When the plurality of clients do not report the alarm signal, the server does not detect the training results of plurality of clients.

In this embodiment of this application, a second condition may be preset. If the training result of the client meets the second condition, it indicates that the training result of the client is normal. If the training result of the client does not meet the second condition, it indicates that the training result of the client is abnormal or malicious.

The second condition may be set based on an actual requirement. This is not limited in this embodiment of this application.

It should be noted that there are a plurality of methods for detecting the training results of the plurality of clients. This is not specifically limited in this embodiment of this application. For example, the training results of the plurality of clients may be detected based on a OneClass SVM algorithm, an isolation forest isolation forest algorithm, a local outlier factor algorithm, a clustering algorithm, a statistical model, a Bhattacharyya distance measurement algorithm, a Chauvenet's criterion, or a Grubbs criterion.

In addition, another method may be used to detect the training results of the plurality of clients. The following specifically describes another method for detecting the training results of the plurality of clients.

Step 106. The server calculates a third value of the parameter based on the training result obtained through screening, where the third value of the parameter is used for a next round of training of the machine learning model.

The next round of training is relative to the current round of training. Specifically, if the current round of training is the fifth round of training in the entire training process, the next round of training is the sixth round of training in the entire training process. If the current round of training is the tenth round of training in the entire training process, the next round of training is the eleventh round of training in the entire training process.

It should be noted that there are a plurality of methods for determining the third value of the parameter by the server based on the training result obtained through screening. For example, the server may aggregate, based on an aggregation algorithm, some or all of the training result obtained through screening, to obtain the third value of the parameter.

The aggregation algorithm includes but is not limited to an average aggregation rule, a GeoMed rule, a Krum aggregation rule, and a trimmed mean rule.

The training result of the current round of training is the value that is of the parameter and that is obtained in the current round of training or the difference between the value that is of the parameter and that is obtained in the current round of training and the local value of the parameter. Therefore, when the training result of the current round of training is the difference between the value that is of the parameter and that is obtained in the current round of training and the local value of the parameter, and the local value of the parameter is equal to the value that is of the parameter and that is obtained in the previous round of training, the server may first calculate, based on the training result and the value that is of the parameter and that is obtained in the previous round of training, the second value of the model parameter for the current round of training, and then perform aggregation based on the second value of the model parameter.

In this embodiment of this application, when at least one client of the plurality of clients further reports the alarm signal, the server screens the training results of the current round of training from the plurality of clients, and determines the third value of the parameter for the next round of training based on the training result obtained through screening, to avoid determining the third value of the parameter by using an abnormal training result, and ensure accuracy of the third value of the parameter.

In conclusion, in the federated learning system, if both the client and the server train the machine learning model by using the foregoing federated learning method, all the clients may be prevented from performing training by using an incorrect value of the parameter because one client is attacked or the server is attacked. In addition, the server may screen the training results based on the alarm information of the client. Therefore, the client assists the server in detecting the training result. Therefore, it may be learned that robustness of the federated learning system can be improved by using the federated learning method provided in this embodiment of this application.

In addition, in an existing federated learning system, in each round of training, the server needs to detect the training result of the client, and a calculation amount of the server in a detection process is positively correlated with a quantity of clients. In this embodiment of this application, only when at least one client of the plurality of clients further reports the alarm signal, the server screens the training results of the plurality of clients. When the plurality of clients do not report the alarm signal, the server does not screen the training results of the plurality of clients. Therefore, it may be learned that the federated learning method in this embodiment of this application can further reduce load of the server, so that the federated learning system has strong scalability.

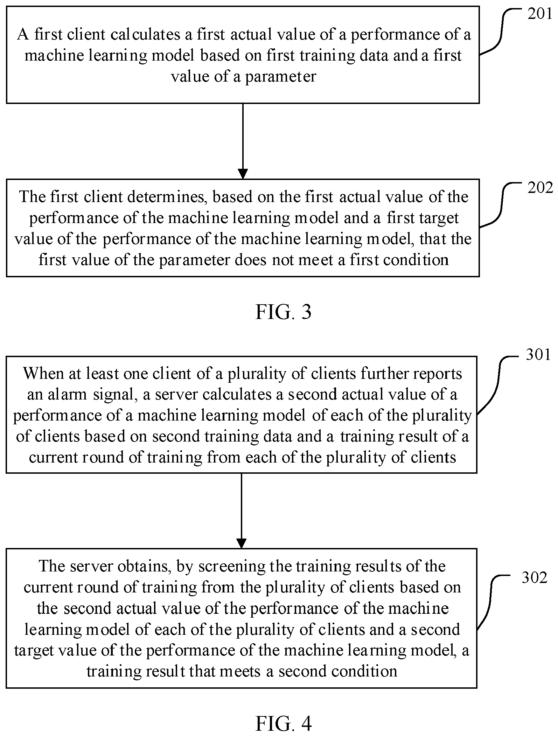

It may be learned from the foregoing descriptions that there are a plurality of methods for determining that the first value of the parameter does not meet the first condition. In an implementation, as shown in FIG. 3, that the first client determines, based on first training data and the machine learning model, that the first value of the parameter does not meet a first condition includes the following steps.

Step 201. The first client calculates a first actual value of a performance of the machine learning model based on the first training data and the first value of the parameter.

It should be noted that there may be a plurality of indicators for measuring the performance of the machine learning model. This is not specifically limited in this embodiment of this application. Specifically, the performance of the machine learning model may include at least one of accuracy, precision, a recall rate, and an F1 score. In addition, an error rate may also be used as the performance of the machine learning model to measure the performance of the machine learning model.

For different indicators of the performance of the machine learning model, methods for calculating the first actual value of the performance of the machine learning model are also different. The following describes, by using the accuracy as an example, a process of calculating the first actual value of the performance of the machine learning model.

For example, the first training data includes 10 positive samples and 10 negative samples. The first client may predict the first training data based on the machine learning model and the first value of the parameter. If the first client identifies 8 positive samples in the 10 positive samples and identifies 8 negative samples in the 10 negative samples, the accuracy (namely, a first performance value) of the machine learning model is 16/20=80%. Correspondingly, the error rate is 20%.

Similarly, the first client may also obtain another performance value of the machine learning model based on the first training data and the first value of the parameter, for example, precision, a recall rate, and an F1 score.

Step 202. The first client determines, based on the first actual value of the performance of the machine learning model and a first target value of the performance of the machine learning model, that the first value of the parameter does not meet the first condition.

The first target value of the performance of the machine learning model is a value that is of the performance of the machine learning model and that is obtained after a previous round of training is performed, or a maximum value that is of the performance of the machine learning model and that is obtained after all rounds of training are performed before the current round of training.

The previous round of training is relative to the current round of training. Specifically, if the current round of training is the fifth round of training in the entire training process, the previous round of training is the fourth round of training in the entire training process. If the current round of training is the tenth round of training in the entire training process, the previous round of training is the ninth round of training in the entire training process.

When the first target value of the performance of the machine learning model is the value that is of the performance of the machine learning model and that is obtained after the previous round of training is performed, the value that is of the performance of the machine learning model and that is obtained after the previous round of training is performed may be calculated based on a value that is of the parameter and that is obtained after the previous round of training and the first training data. For a specific calculation process, refer to a process of calculating the first actual value of the performance of the machine learning model.

After completing the previous round of training, the first client may obtain and store the value that is of the performance of the machine learning model and that is obtained after the previous round of training is performed. In this way, in the current round of training, the first client may directly use, as the first target value, the stored value that is of the performance of the machine learning model and that is obtained after the previous round of training is performed, and then perform step 202.

When the first target value is the maximum value that is of the performance of the machine learning model and that is obtained after all rounds of training are performed before the current round of training, a value that is of the performance of the machine learning model and that is obtained after each round of training is performed may be obtained by using a same method. This is not specifically described herein.

The following describes the first target value of the performance of the machine learning model by using a specific example.

In this example, the current round of training is the fifth round of training in the entire training process, and the performance value of the machine learning model is represented by using the accuracy. Values that are of the performance of the machine learning model and that are obtained after the first four rounds of training are performed are respectively 75%, 78%, 80%, and 83%. Therefore, the first target value of the performance of the machine learning model may be a value, namely, 83%, that is of the performance of the machine learning model and that is obtained after the fourth round of training is performed, or may be a maximum value, namely, 83%, that is of the performance of the machine learning model and that is obtained after the first four rounds of training are performed.

It should be noted that there are a plurality of methods in which the first client determines, based on the first actual value of the performance of the machine learning model and the first target value of the performance of the machine learning model, that the first value of the parameter does not meet the first condition.

In an implementation, a larger first performance value indicates a better performance of the machine learning model. For example, the first performance value is at least one of accuracy, precision, a recall rate, and an F1 score.

Based on this, that the first client determines, based on the first actual value of the performance of the machine learning model and a first target value of the performance of the machine learning model, that the first value of the parameter does not meet the first condition may include:

The first client determines, based on that a difference between the first target value of the performance of the machine learning model and the first actual value of the performance of the machine learning model is greater than a first threshold, that the first value of the parameter does not meet the first condition.

In this case, the first condition is that the difference between the first target value of the performance of the machine learning model and the first actual value of the performance of the machine learning model is less than or equal to the first threshold.

The first threshold may be set based on an actual requirement.

For example, the performance is accuracy, the first target value of the performance is specifically 83%, and the first threshold is 2%. When the first actual value of the performance is less than 81%, it indicates that the first value of the parameter of the first client does not meet the first condition.

In an implementation, a smaller performance value indicates a better performance of the machine learning model, for example, the performance is an error rate.

Based on this, that the first client determines, based on the first actual value of the performance of the machine learning model and a first target value of the performance of the machine learning model, that the first value of the parameter does not meet the first condition may include:

The first client determines, based on that a difference between the first target value of the performance of the machine learning model and the first actual value of the performance of the machine learning model is less than a first threshold, that the first value of the parameter does not meet the first condition.

For example, the performance is an error rate, the first target value of the performance is specifically 17%, and the first threshold is 2%. When the first actual value of the performance is greater than 19%, it indicates that the first value of the parameter of the first client does not meet the first condition.

In this embodiment of this application, the first client determines, based on the first actual value of the performance of the machine learning model and the first target value of the performance of the machine learning model, that the first value of the parameter does not meet the first condition, to avoid performing training by using a value that is of the parameter and that makes the machine learning model have a specific poor performance, that is, to ensure that training is performed by using a value that is of the parameter and that makes the machine learning model have a specific good performance, so that a final performance of the machine learning model can be improved.

It may be learned from the foregoing descriptions that a plurality of methods may be used to screen the training results of the plurality of clients. The following specifically describes a method for screening the training results of the plurality of clients.

For example, as shown in FIG. 4, that the server obtains, when at least one client of the plurality of clients further reports an alarm signal, a training result by screening the training results of the current round of training from the plurality of clients includes the following steps.

Step 301. When at least one client of the plurality of clients further reports the alarm signal, the server calculates a second actual value of a performance of the machine learning model of each of the plurality of clients based on second training data and the training result of the current round of training from each of the plurality of clients.

For each client, the second actual value of the performance of the machine learning model may be calculated based on a training result of the client and the second training data.

The second actual value of the performance of the machine learning model is a value that is of the performance of the machine learning model and that is obtained after the current round of training is performed, the second training data is data reserved on the server, and the second training data may also be referred to as local data of the server.

Step 302. The server obtains, by screening the training results of the current round of training from the plurality of clients based on the second actual value of the performance of the machine learning model of each of the plurality of clients and a second target value of the performance of the machine learning model, a training result that meets a second condition.

It should be noted that the second target value may be set based on an actual requirement. This is not specifically limited in this embodiment of this application.

For example, the second target value of the performance of the machine learning model is a maximum value that is of the performances of the machine learning models of the plurality of clients and that is obtained after all rounds of training are performed before the current round of training. For example, the performance is accuracy, there are three clients in the federated learning system, and two rounds of training have been performed before the current round of training. After the first round of training is performed, accuracy of the machine learning model of the three clients is respectively 77%, 78%, and 77%. After the first round of training is performed, accuracy of the machine learning model of the three clients is respectively 79%, 80%, and 78%. Therefore, the second target value is a maximum value of the accuracy of the machine learning model in the two rounds of training, namely, 80%.

For example, the second target value of the performance of the machine learning model is a maximum value of the second actual values of the performances of the machine learning models of the plurality of clients. For example, after the current round of training is performed, the second actual values of the performances of the machine learning models of the plurality of clients are respectively 83%, 84%, and 85%. In this case, the second target value may be 85%.

In addition, there are a plurality of methods for obtaining, through screening based on the second actual value of the performance of the machine learning model of each of the plurality of clients and the second target value of the performance of the machine learning model, the training result that meets the second condition.

In an implementation, a larger second actual value of the performance indicates a better performance of the machine learning model. In this case, the performance may be at least one of accuracy, precision, a recall rate, and an F1 score.

Based on this, that the server determines, from the training results of the plurality of clients based on a second performance value and a second target performance value of the machine learning model of each of the plurality of clients, a training result that meets the second condition includes:

Based on that a second actual value of the performance of the machine learning model of a second client is greater than a second target value of the performance of the machine learning model or a second difference is less than a second threshold, the server determines that a training result of the second client meets the second condition, where the second difference is equal to a difference between the second target performance value and the second performance value of the machine learning model of the second client, and the second client is any one of the plurality of clients.

In this case, the second condition is that the second actual value of the performance of the machine learning model of the second client is greater than the second target value of the performance of the machine learning model or the second difference is less than the second threshold, where the second difference is equal to a difference between the second target value of the performance of the machine learning model and the second actual value of the performance of the machine learning model of the second client, and the second client is any one of the plurality of clients.

The second threshold may be set based on an actual requirement.

For example, the performance of the machine learning model of the second client is accuracy, the second target value of the performance is specifically 85%, and the second threshold is 2%. When the second actual value of the performance of the machine learning model of the second client is greater than 83%, it indicates that the training result of the second client meets the second condition.

In an implementation, a smaller second actual value of the performance indicates a better performance of the machine learning model, for example, the performance is an error rate.

Based on this, that the server determines, from the training results of the plurality of clients based on a second performance value and a second target performance value of the machine learning model of each of the plurality of clients, a training result that meets the second condition includes:

Based on that a second actual value of the performance of the machine learning model of a second client is greater than a second target value of the performance of the machine learning model or a second difference is greater than a second threshold, the server determines that a training result of the second client meets the second condition.

For example, the performance is an error rate, the second target value of the performance is specifically 15%, and the second threshold is 2%. When the second actual value of the performance is less than 13%, it indicates that the training result of the second client meets the second condition.

It may be learned from the foregoing descriptions that there are a plurality of methods for calculating the third value of the parameter by the server based on the training result obtained through screening. The following separately describes three methods by using three examples.

### Example 1:

In this example, the first value of the parameter is abnormal, and some clients in the plurality of clients identify that the first value of the parameter is abnormal, and then perform training by using the local value of the parameter to obtain the training result. Finally, when sending the training result, the part of clients send the alarm signal to the server. Therefore, the training result of the client that reports the alarm signal received by the server is normal.

In this scenario, the server determines the third value of the parameter based on the training result of the client that reports the alarm signal.

Specifically, in the training results of the plurality of clients, all of training results of clients that report the alarm signal meet the second condition.

A maximum value of a second actual value that is of the performance of the machine learning model and that is calculated based on the training result of the client that reports the alarm signal is greater than a maximum value of a second actual value that is of the performance of the machine learning model and that is calculated based on a training result of a client that does not report the alarm signal.

It may be learned from the related descriptions in step 301 that the second actual value of the performance of the machine learning model of the client may be obtained based on the training result of the client. Therefore, based on the calculation result in step 301, it may be determined that the maximum value of the second actual value that is of the performance of the machine learning model and that is calculated based on the training result of the client that reports the alarm signal is greater than the maximum value of the second actual value that is of the performance of the machine learning model and that is calculated based on the training result of the client that does not report the alarm signal.

Based on the foregoing scenario, that the server calculates a third value of the parameter based on the training result obtained through screening includes:

The server determines the third value of the parameter based on the training result that is of the client that reports the alarm signal and that is in the training result obtained through screening.

It should be noted that the server aggregates, based on the foregoing aggregation algorithm, the training result of the client that reports the alarm signal, to obtain the third value of the parameter. For details, refer to the related descriptions of the foregoing aggregation algorithm.

It may be learned from the foregoing descriptions that, when only a part of clients identify that the first value of the parameter is abnormal, and send the alarm signal, the server determines the third value of the parameter based on the training result that is of the client that reports the alarm signal and that is in the training result obtained through screening. In this manner, the determined third value of the parameter makes the machine learning model have a better performance, so that fast convergence of the machine learning model can be accelerated.

### Example 2:

In this example, the first value of the parameter is normal, but some clients in the plurality of clients are attacked, and consequently the part of clients send a malicious training result to the server. Although the malicious training result meets the second condition, the training result is poor, and is not conducive to fast convergence of the machine learning model. In addition, when sending the malicious training result, the part of clients further send the alarm signal. The alarm signal is used to make the server mistakenly consider that the training result carrying the alarm signal is normal and not malicious.

In this scenario, the server determines the third value of the parameter based on the training result, obtained through screening, of the client that does not report the alarm signal.

Specifically, in the training results of the plurality of clients, all of training results of clients that report the alarm signal meet the second condition. This is the same as that in Example 1.

Different from Example 1, a maximum value of a second actual value that is of the performance of the machine learning model and that is calculated based on the training result of the client that reports the alarm signal is less than a maximum value of a second actual value that is of the performance of the machine learning model and that is calculated based on a training result of a client that does not report the alarm signal.

It may be learned from the related descriptions in step 301 that the second actual value of the performance of the machine learning model of the client may be obtained based on the training result of the client. Therefore, based on the calculation result in step 301, it may be determined that the maximum value of the second actual value that is of the performance of the machine learning model and that is calculated based on the training result of the client that reports the alarm signal is less than the maximum value of the second actual value that is of the performance of the machine learning model and that is calculated based on the training result of the client that does not report the alarm signal.

Based on the foregoing scenario, that the server calculates a third value of the parameter based on the training result obtained through screening includes:

The server determines the third value of the parameter based on the training result that is of the client that does not report the alarm signal and that is in the training result obtained through screening.

It may be learned from the foregoing descriptions that the training result of the client that reports the alarm signal may be a malicious training result sent by an attacked client, and the second actual value that is of the performance of the machine learning model and that is obtained based on the training result of the client that does not report the alarm signal is high. Therefore, in this embodiment of this application, the server determines the third value of the parameter based on the training result that is of the client that does not report the alarm signal and that is in the training result obtained through screening. In this manner, the determined third value of the parameter makes the machine learning model have a better performance, so that fast convergence of the machine learning model can be accelerated.

### Example 3:

In this example, in the plurality of clients, there is an attacked client, and there is also unattacked client. When sending the training result to the server, both the attacked client and the unattacked client send the alarm signal to the server. In this scenario, the server determines the third value of the parameter based on the training result that is of the client that does not report the alarm signal and that is in the training result obtained through screening.

Specifically, some of training results of clients that report the alarm signal meet the second condition. That some of training results of clients that report the alarm signal meet the second condition means that in the training results of the clients that report the alarm signal, there is a training result that meets the second condition, and there is also a training result that does not meet the second condition.

Based on the foregoing scenario, that the server calculates a third value of the parameter based on the training result obtained through screening includes:

The server determines the third value of the parameter based on the training result that is of the client that reports the alarm signal and that is in the training result obtained through screening.

In this embodiment of this application, when some of the training results that are of the clients that report the alarm signal and that are in the training results of the plurality of clients meet the second condition, the server determines the third value of the parameter based on the training result that is of the client that reports the alarm signal and that is in the training result obtained through screening. In this way, the determined third value of the parameter makes the machine learning model have a better performance, so that fast convergence of the machine learning model can be accelerated.

The foregoing describes a process of detecting the first value of the parameter by the client in the training process and a process of detecting the training result of each client by the server. In addition, the federated learning method provided in this embodiment of this application may further include content of penalty management, that is, the server performs special processing on a client whose training result is abnormal for a plurality of times.

For example, the federated learning method provided in this embodiment of this application further includes:

In M rounds of training including the current round of training, if a training result of a third client is not included in the training result obtained through screening, the server obtains, through screening, the training result only from a training result of another client other than the third client in the plurality of clients in N rounds of training after the current round of training, where the third client is any one of the plurality of clients, and both M and N are positive integers.

Both M and N may be set based on an actual requirement. For example, M is 5, and N is 3. For another example, M is 3, and N is 5.

It may be understood that, in the current round of training, the training result of the third client is not included in the training result obtained through screening, and by the current round of training, the training result of the third client in the M rounds of training that have been performed is not included in the training result obtained through screening. Therefore, the server obtains, through screening, the training result only from the training result of the another client other than the third client in the plurality of clients in the N rounds of training after the current round of training. In this way, the server does not determine a value of the parameter by using the training result of the third client.

In the N rounds of training, the server may still send the determined value of the parameter to the third client, so that the third client trains the machine learning model. In an (N+1)^{th} round of training, the server obtains the training result through screening based on the training results of the plurality of clients including the training result of the third client.

For example, M is equal to 5, and N is 3. The current round of training is the tenth round of training in the entire training process. In the fifth, sixth, seventh, eighth, and tenth rounds of training, the training result of the third client is not included in the training result obtained through screening. Therefore, the training result of the third client in the five rounds of training that have been performed is not included in the training result obtained through screening. Then, in the eleventh, twelfth, and thirteenth rounds of training, the server obtains, through screening, the training result only from the training result of the another client other than the third client. In the fourteenth round of training, the server obtains the training result through screening based on the training results of the plurality of clients including the training result of the third client.

It should be noted that, there may be a plurality of method in which the server obtains, through screening, the training result only from the training result of the another client other than the third client in the plurality of clients in the N rounds of training after the current round of training. For example, in the M rounds of training including the current round of training, if the training result of the third client is not included in the training result obtained through screening, the server may refuse to receive the training result of the third client in the N rounds of training after the current round of training. In addition, the server may receive the training result of the third client in the N rounds of training after the current round of training, but refuses to use the training result of the third client.

The foregoing describes the federated learning method provided in this embodiment of this application. For ease of understanding, the following further describes the federated learning method by using an application example.

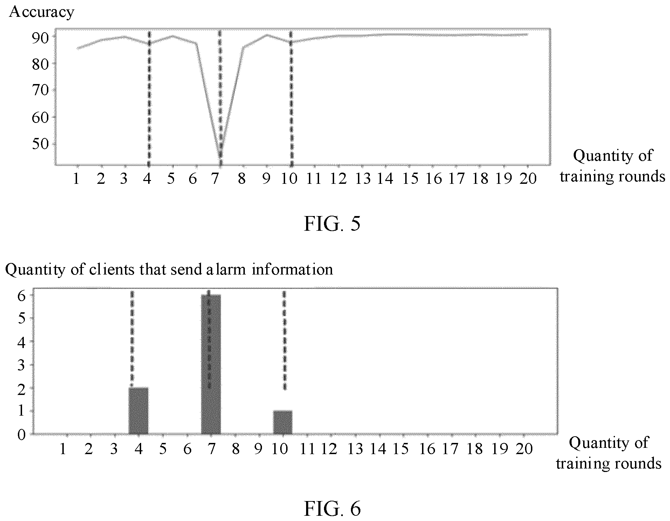

In the application example, a quantity of clients is 10, a convergence condition of the machine learning model is that 20 rounds of training are completed; in the third to sixth rounds of training, the ninth to twelfth rounds of training, and the fifteenth to eighteenth rounds of training, clients numbered 6, 7, 8, and 9 are all attacked; a performance value of the machine learning model is represented by using accuracy; and in the foregoing embodiment, M is 2, N is 20, and both the first threshold and the second threshold are 3%. In the 20 rounds of training, the client and the server separately perform training by using the federated learning method provided in this embodiment of this application. For the entire training process, refer to FIG. 5 and FIG. 6. FIG. 5 is a schematic diagram of accuracy of a machine learning model on a server. FIG. 6 is a schematic diagram of a quantity of clients that send alarm information in each round of training.

It may be learned by comparing FIG. 5 and FIG. 6 that, in the third round of training, the clients numbered 6, 7, 8, and 9 are all attacked, so that some clients send an abnormal training result to the server. Therefore, accuracy of the machine learning model in FIG. 5 decreases. In the fourth round of training, two clients send the alarm information to the server, and the server detects training results of 10 clients to identify a normal training result. Therefore, accuracy of the machine learning model in FIG. 5 increases from the fourth round of training.

In the third to sixth rounds of training, clients numbered 6, 7, 8, and 9 are continuously attacked. Consequently, accuracy of the machine learning model in FIG. 5 sharply decreases in the seventh round of training. In addition, six clients send the alarm information to the server, and the server detects training results of 10 clients to identify a normal training result. Therefore, accuracy of the machine learning model in FIG. 5 sharply increases from the seventh round of training.

Because M is 2 and N is 20, if a training result of a client in the two rounds of training does not meet the second condition, the training result is discarded. Based on this, in the ninth round of training, the clients numbered 6, 7, 8, and 9 are attacked again. In the tenth round of training, only one client sends the alarm information. In addition, compared with a decrease amplitude of accuracy of the machine learning model in FIG. 5 in the seventh round of training, a decrease amplitude of accuracy of the machine learning model in FIG. 5 is greatly reduced.

More clearly, in the fifteenth to eighteenth rounds of training, even if the clients numbered 6, 7, 8, and 9 are attacked again, accuracy of the machine learning model in FIG. 5 no longer decreases, and is finally maintained at around 90%.

It may be learned from the foregoing descriptions that an attack can be effectively resisted by using the federated learning method provided in this embodiment of this application as a defense strategy, and the performance of the machine learning model finally converges to a high performance.

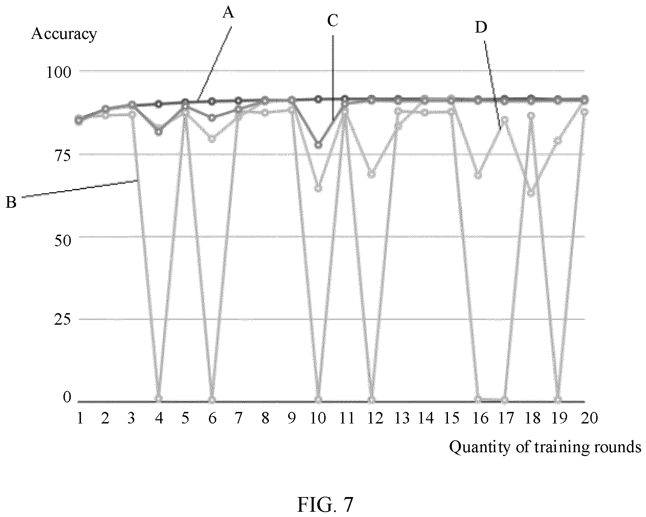

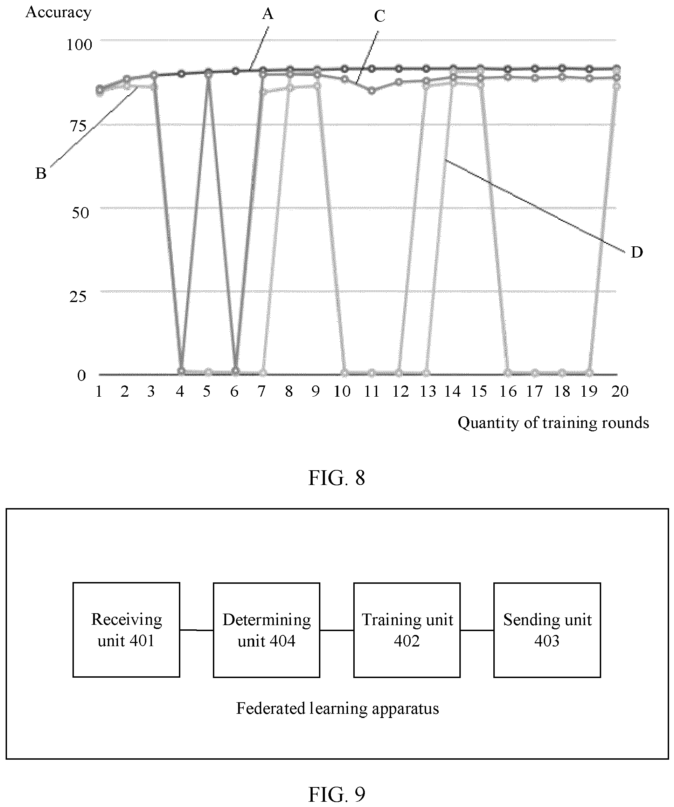

In addition, in the application example, the federated learning method and the two existing defense policies provided in this embodiment of this application are further simulated. Simulation results are shown in FIG. 7 and FIG. 8.

A simulation condition corresponding to the simulation result shown in FIG. 7 is as follows: A quantity of clients is 10; a convergence condition of the machine learning model is that 20 rounds of training are completed; in the third to sixth rounds of training, the ninth to twelfth rounds of training, and the fifteenth to eighteenth rounds of training, four clients are all attacked; a performance value of the machine learning model is represented by using accuracy; and in the foregoing embodiment, M is 2, N is 20, and both the first threshold and the second threshold are 3%. In the 20 rounds of training, the client and the server separately perform training by using the federated learning method provided in this embodiment of this application.

A simulation condition corresponding to the simulation result shown in FIG. 8 is as follows: A quantity of clients is 10; a convergence condition of the machine learning model is that 20 rounds of training are completed; in the third to sixth rounds of training, the ninth to twelfth rounds of training, and the fifteenth to eighteenth rounds of training, eight clients are all attacked; a performance value of the machine learning model is represented by using accuracy; and in the foregoing embodiment, M is 2, N is 20, and both the first threshold and the second threshold are 3%. In the 20 rounds of training, the client and the server separately perform training by using the federated learning method provided in this embodiment of this application.

In FIG. 7 and FIG. 8, a curve A indicates a change of accuracy of the machine learning model of the server when the federated learning system defends against an attack by using the federated learning method provided in this embodiment of this application and no client is attacked in a training process. A curve B indicates a change of accuracy of the machine learning model of the server when the federated learning system defends against an attack by using an existing first defense method and a client is attacked in a training process. A curve C indicates a change of accuracy of the machine learning model on the server when the federated learning system defends against an attack by using the federated learning method provided in this embodiment of this application and a client is attacked in a training process. A curve D indicates a change of accuracy of the machine learning model of the server when the federated learning system defends against an attack by using an existing second defense method and a client is attacked in a training process.

It may be learned from FIG. 7 that, when the client is attacked, an attack is defended by using the federated learning method provided in this embodiment of this application. Compared with a manner of defending against an attack by using the existing first defense method and second defense method, a fluctuation range of the accuracy of the machine learning model is small. In addition, as training progresses, if an attack is defended by using the federated learning method provided in this embodiment of this application, even if the client is attacked again, accuracy of the machine learning model no longer fluctuates, and approaches accuracy shown by the curve A, namely, accuracy that is of the machine learning model and that exists when no client is attacked in the training process.

It may be learned from FIG. 8 that an increase in a quantity of attacked clients causes an increase in fluctuation of accuracy. In the previous rounds of training, when the client is attacked again, the federated learning method provided in this embodiment of this application is used to defend against an attack. Compared with a manner of defending against an attack by using the existing first defense method and second defense method, a fluctuation range of the accuracy of the machine learning model is approximately the same. However, when an attack is defended by using the federated learning method provided in this embodiment of this application, accuracy of the machine learning model is quickly recovered to accuracy that is of the machine learning model and that exists before the client is attacked. More importantly, as training progresses, if an attack is defended by using the federated learning method provided in this embodiment of this application, even if the client is attacked again, accuracy of the machine learning model no longer fluctuates, and approaches accuracy shown by the curve A, namely, accuracy that is of the machine learning model and that exists when no client is attacked in the training process.

FIG. 9 is a schematic diagram of a structure of a first embodiment of a federated learning apparatus according to an embodiment of this application.

An embodiment of this application further provides an embodiment of a federated learning apparatus, applied to a federated learning system, where the federated learning system includes a server and a plurality of clients, a same machine learning model is deployed on the plurality of clients, and the federated learning apparatus is included in one of the plurality of clients, and includes:
a receiving unit 401, configured to receive a first value of a parameter of the machine learning model from the server;
a training unit 402, configured to: when the first value of the parameter does not meet a first condition, perform a current round of training based on first training data, the machine learning model, and a local value of the parameter, to obtain a training result of the current round of training, where the first training data is data reserved on the first client; and
a sending unit 403, configured to send the training result and alarm information to the server, where the alarm information indicates that the first value of the parameter does not meet a requirement.

In an implementation, the local value of the parameter is equal to a value that is of the parameter and that is obtained in a previous round of training.

In an implementation, the training result of the current round of training is a value that is of the parameter and that is obtained in the current round of training, or a difference between a value that is of the parameter and that is obtained in the current round of training and the local value of the parameter.

In an implementation, the federated learning apparatus further includes a determining unit 404, configured to determine, based on the first training data and the machine learning model, that the first value of the parameter does not meet the first condition.

In an implementation, the determining unit 404 is configured to: calculate a first actual value of a performance of the machine learning model based on the first training data and the first value of the parameter; and
determine, based on the first actual value of the performance of the machine learning model and a first target value of the performance of the machine learning model, that the first value of the parameter does not meet the first condition.

In an implementation, a first target value of a performance of the machine learning model is a value that is of the performance of the machine learning model and that is obtained after a previous round of training is performed, or a maximum value that is of the performance of the machine learning model and that is obtained after all rounds of training are performed before the current round of training.

In an implementation, the first condition is that a difference between the first target value of the performance of the machine learning model and the first actual value of the performance of the machine learning model is less than or equal to a first threshold.

In an implementation, the performance of the machine learning model includes at least one of accuracy, precision, a recall rate, and an F1 score.

For specific implementation, related descriptions, and technical effects of the foregoing units, refer to the descriptions of the embodiments shown in FIG. 2 to FIG. 4 of the embodiments of this application.

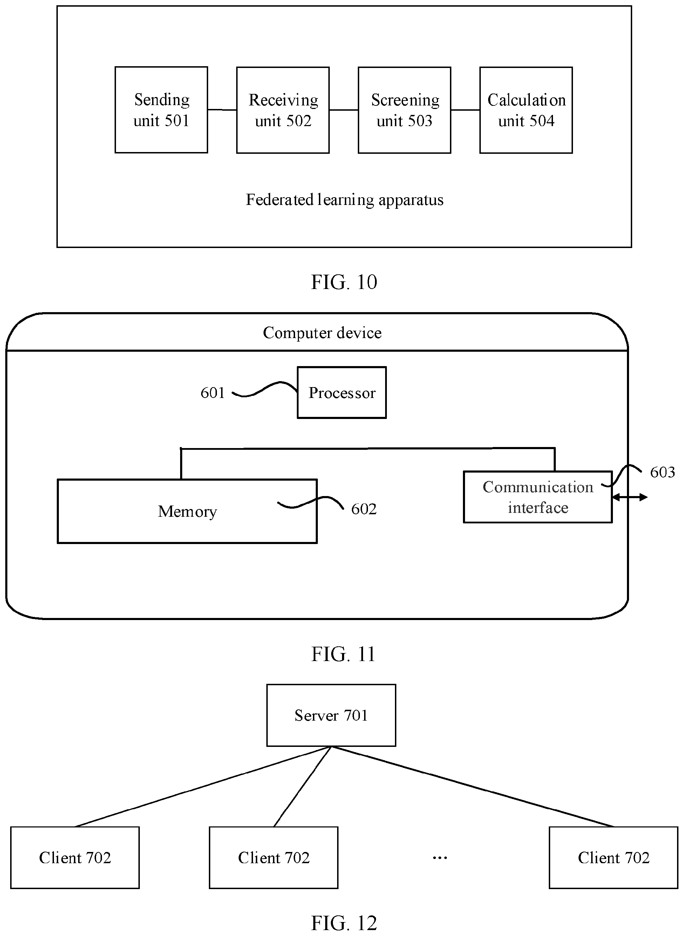

FIG. 10 is a schematic diagram of a structure of a second embodiment of a federated learning apparatus according to an embodiment of this application.

An embodiment of this application further provides another embodiment of a federated learning apparatus, applied to a federated learning system, where the federated learning system includes a server and a plurality of clients, a same machine learning model is deployed on the plurality of clients, and the federated learning apparatus is included in the server, and includes:
a sending unit 501, configured to separately send a first value of a parameter of the machine learning model to the plurality of clients, where the first value of the parameter is used for a current round of training of the machine learning model;
a receiving unit 502, configured to receive a training result of the current round of training from each of the plurality of clients;
a screening unit 503, configured to obtain, by the server when at least one client of the plurality of clients further reports an alarm signal, a training result by screening the training results of the current round of training from the plurality of clients, where the alarm information indicates that the first value of the parameter does not meet a first condition; and
a calculation unit 504, configured to calculate a third value of the parameter based on the training result obtained through screening, where the third value of the parameter is used for a next round of training of the machine learning model.

In an implementation, the training result of the current round of training is a value that is of the parameter and that is obtained in the current round of training, or a difference between a value that is of the parameter and that is obtained in the current round of training and a local value of the parameter.

In an implementation, the screening unit 503 is configured to: when at least one client of the plurality of clients further reports the alarm signal, calculate a second actual value of a performance of the machine learning model of each of the plurality of clients based on second training data and the training result of the current round of training from each of the plurality of client, where the second actual value of the performance of the machine learning model is a value that is of the performance of the machine learning model and that is obtained after the current round of training is performed, and the second training data is data reserved on the server; and
obtain, by screening the training results of the current round of training from the plurality of clients based on the second actual value of the performance of the machine learning model of each of the plurality of clients and a second target value of the performance of the machine learning model, a training result that meets a second condition.

In an implementation, the second target value of the performance of the machine learning model is a maximum value that is of the performances of the machine learning models of the plurality of clients and that is obtained after all rounds of training are performed before the current round of training; or
the second target value of the performance of the machine learning model is a maximum value of the second actual values of the performances of the machine learning models of the plurality of clients.

In an implementation, the second condition is that a second actual value of the performance of the machine learning model of a second client is greater than a second target value of the performance of the machine learning model or a second difference is less than a second threshold, where the second difference is equal to a difference between the second target value of the performance of the machine learning model and the second actual value of the performance of the machine learning model of the second client, and the second client is any one of the plurality of clients.

In an implementation, all of training results of clients that report the alarm signal meet the second condition, and a maximum value of a second actual value that is of the performance of the machine learning model and that is calculated based on the training result of the client that reports the alarm signal is greater than a maximum value of a second actual value that is of the performance of the machine learning model and that is calculated based on a training result of a client that does not report the alarm signal.

The calculation unit 504 is configured to determine the third value of the parameter based on the training result that is of the client that reports the alarm signal and that is in the training result obtained through screening.

In an implementation, all of training results of clients that report the alarm signal meet the second condition, and a maximum value of a second actual value that is of the performance of the machine learning model and that is calculated based on the training result of the client that reports the alarm signal is less than a maximum value of a second actual value that is of the performance of the machine learning model and that is calculated based on a training result of a client that does not report the alarm signal.

The calculation unit 504 is configured to determine the third value of the parameter based on the training result that is of the client that does not report the alarm signal and that is in the training result obtained through screening.

In an implementation, some of training results of clients that report the alarm signal meet the second condition.

The calculation unit 504 is configured to determine the third value of the parameter based on the training result that is of the client that reports the alarm signal and that is in the training result obtained through screening.

In an implementation, the screening unit 503 is further configured to: in M rounds of training including the current round of training, if a training result of a third client is not included in the training result obtained through screening, obtain, through screening, the training result only from a training result of another client other than the third client in the plurality of clients in N rounds of training after the current round of training, where the third client is any one of the plurality of clients, and both M and N are positive integers.

For specific implementation, related descriptions, and technical effects of the foregoing units, refer to the descriptions of the embodiments shown in FIG. 2 to FIG. 4 of the embodiments of this application.

FIG. 11 is a schematic diagram of a structure of a computer device according to an embodiment of this application.

In this embodiment of this application, an embodiment of the computer device may include one or more processors 601, a memory 602, and a communication interface 603.

The memory 602 may be used for temporary storage or permanent storage. Further, the processor 601 may be configured to: communicate with the memory 602, and perform, on a terminal device, a series of instruction operations in the memory 602.

In this embodiment, the processor 601 may perform the steps performed by the client in the embodiments shown in FIG. 2 and FIG. 3. Details are not described herein again.

For example, the processor 601 may perform the following steps:
receiving a first value of a parameter from a server, where a first client is one of a plurality of clients;
when the first value of the parameter does not meet a first condition, performing a current round of training based on first training data, a machine learning model, and a local value of the parameter, to obtain a training result of the current round of training, where the first training data is data reserved on the first client; and
sending the training result of the current round of training and alarm information to the server, where the alarm information indicates that the first value of the parameter does not meet a requirement.

In this case, specific division of functional modules in the processor 601 may be similar to a division manner of functional modules such as the receiving unit, the determining unit, the training unit, and the sending unit described in FIG. 9, and details are not described herein again.

For example, the processor 601 may perform the following steps:
separately sending a first value of a parameter to a plurality of clients, where the first value of the parameter is used for a current round of training of a machine learning model;
receiving a training result of the current round of training from each of the plurality of clients;
obtaining, when at least one client of the plurality of clients further reports an alarm signal, a training result by screening the training results of the current round of training from the plurality of clients, where the alarm information indicates that the first value of the parameter does not meet a first condition; and
calculating a third value of the parameter based on the training result obtained through screening, where the third value of the parameter is used for a next round of training of the machine learning model.

In this case, specific division of functional modules in the processor 601 may be similar to a division manner of functional modules such as the sending unit, the receiving unit, the first determining unit, and the second determining unit described in FIG. 10, and details are not described herein again.

An embodiment of this application further provides a chip or a chip system. The chip or the chip system includes at least one processor and a communication interface. The communication interface and the at least one processor are interconnected by using a line. The at least one processor is configured to run a computer program or instructions, to perform the steps performed by the first client in the embodiments shown in FIG. 2 and FIG. 3. Details are not described herein again.

The communication interface in the chip may be an input/output interface, a pin, a circuit, or the like.

An embodiment of this application further provides a first implementation of a chip or a chip system. The chip or the chip system described in this application further includes at least one memory, and the at least one memory stores instructions. The memory may be an internal storage unit of the chip, for example, a register or a cache, or may be a storage unit of the chip (for example, a read-only memory or a random access memory).

An embodiment of this application further provides a chip or a chip system. The chip or the chip system includes at least one processor and a communication interface. The communication interface and the at least one processor are interconnected by using a line. The at least one processor is configured to run a computer program or instructions, to perform the steps performed by the server in the embodiments shown in FIG. 2 and FIG. 4. Details are not described herein again.

The communication interface in the chip may be an input/output interface, a pin, a circuit, or the like.

An embodiment of this application further provides a first implementation of a chip or a chip system. The chip or the chip system described in this application further includes at least one memory, and the at least one memory stores instructions. The memory may be an internal storage unit of the chip, for example, a register or a cache, or may be a storage unit of the chip (for example, a read-only memory or a random access memory).

An embodiment of this application further provides a computer storage medium. The computer storage medium is configured to store computer software instructions used by the terminal device or server, and includes a program designed for the server.

The terminal device may be the federated learning apparatus described in FIG. 9.

The server may be the federated learning apparatus described in FIG. 10.

An embodiment of this application further provides a computer program product. The computer program product includes computer software instructions, and the computer software instructions may be loaded by a processor to implement a procedure in the methods shown in FIG. 2, FIG. 3, and FIG. 4.

FIG. 12 is a schematic diagram of a structure of a federated learning system according to an embodiment of this application.

An embodiment of this application further provides an embodiment of a federated learning system, including a server 701 and a plurality of clients 702, where a same machine learning model is deployed on the plurality of clients 702.

Each client 702 in the plurality of clients 702 is configured to perform the steps performed by the first client in the foregoing embodiment.

The server 701 is configured to perform the steps performed by the server in the foregoing embodiment.

It may be clearly understood by persons skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software function unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

## Claims

1. A federated learning method, applied to a federated learning system, wherein the federated learning system comprises a server and a plurality of clients, a same machine learning model is deployed on the plurality of clients, and the method comprises:
receiving, by a first client, a first value of a parameter of the machine learning model from the server, wherein the first client is one of the plurality of clients;
when the first value of the parameter does not meet a first condition, performing, by the first client, a current round of training based on the first training data, the machine learning model, and a local value of the parameter, to obtain a training result of the current round of training, wherein the first training data is data reserved on the first client; and
sending, by the first client, the training result of the current round of training and alarm information to the server, wherein the alarm information indicates that the first value of the parameter does not meet the first condition.

2. The method according to claim 1, wherein the local value of the parameter is equal to a value that is of the parameter and that is obtained in a previous round of training.

3. The method according to claim 1 or 2, wherein the training result of the current round of training is a value that is of the parameter and that is obtained in the current round of training, or a difference between a value that is of the parameter and that is obtained in the current round of training and the local value of the parameter.

4. The method according to any one of claims 1 to 3, wherein the method further comprises:
determining, by the first client based on the first training data and the machine learning model, that the first value of the parameter does not meet the first condition.

5. The method according to claim 4, wherein the determining, by the first client based on the first training data and the machine learning model, that the first value of the parameter does not meet the first condition comprises:
calculating, by the first client, a first actual value of at least one performance of the machine learning model based on the first training data and the first value of the parameter; and
determining, by the first client based on the first actual value of the at least one performance of the machine learning model and a first target value of the at least one performance of the machine learning model, that the first value of the parameter does not meet the first condition.

6. The method according to claim 4, wherein a first target value of at least one performance of the machine learning model is a value that is of the at least one performance of the machine learning model and that is obtained after a previous round of training is performed, or a maximum value that is of the at least one performance of the machine learning model and that is obtained after all rounds of training are performed before the current round of training.

7. The method according to claim 5 or 6, wherein the first condition is that a difference between the first target value of the performance of the machine learning model and the first actual value of the performance of the machine learning model is less than or equal to a first threshold.

8. The method according to any one of claims 4 to 6, wherein the performance of the machine learning model comprises at least one of accuracy, precision, a recall rate, and an F1 score.

9. A federated learning method, applied to a federated learning system, wherein the federated learning system comprises a server and a plurality of clients, a machine learning model is deployed on the plurality of clients, and the method comprises:
separately sending, by the server, a first value of a parameter of the machine learning model to the plurality of clients, wherein the first value of the parameter is used for a current round of training of the machine learning model;
receiving, by the server, a training result of the current round of training from each of the plurality of clients;
obtaining, by the server when at least one client of the plurality of clients further reports an alarm signal, a training result by screening the training results of the current round of training from the plurality of clients, wherein the alarm information indicates that the first value of the parameter does not meet a first condition; and
calculating, by the server, a third value of the parameter based on the training result obtained through screening, wherein the third value of the parameter is used for a next round of training of the machine learning model.

10. The method according to claim 9, wherein the training result of the current round of training is a value that is of the parameter and that is obtained in the current round of training, or a difference between a value that is of the parameter and that is obtained in the current round of training and a local value of the parameter.

11. The method according to claim 9 or 10, wherein the obtaining, by the server when at least one client of the plurality of clients further reports an alarm signal, a training result by screening the training results of the current round of training from the plurality of clients comprises:
when at least one client of the plurality of clients further reports the alarm signal, calculating, by the server, a second actual value of a performance of the machine learning model of each of the plurality of clients based on second training data and the training result of the current round of training from each of the plurality of clients, wherein the second actual value of the performance of the machine learning model is a value that is of the performance of the machine learning model and that is obtained after the current round of training is performed, and the second training data is data reserved on the server; and
obtaining, by the server by screening the training results of the current round of training from the plurality of clients based on the second actual value of the performance of the machine learning model of each of the plurality of clients and a second target value of the performance of the machine learning model, a training result that meets a second condition.

12. The method according to claim 11, wherein the second target value of the performance of the machine learning model is a maximum value that is of the performances of the machine learning models of the plurality of clients and that is obtained after all rounds of training are performed before the current round of training; or
the second target value of the performance of the machine learning model is a maximum value of the second actual values of the performances of the machine learning models of the plurality of clients.

13. The method according to claim 11 or 12, wherein the second condition is that a second actual value of the performance of the machine learning model of a second client is greater than a second target value of the performance of the machine learning model or a second difference is less than a second threshold, wherein the second difference is equal to a difference between the second target value of the performance of the machine learning model and the second actual value of the performance of the machine learning model of the second client, and the second client is any one of the plurality of clients.

14. The method according to any one of claims 11 to 13, wherein all of training results of clients that report the alarm signal meet the second condition;
a maximum value of a second actual value that is of the performance of the machine learning model and that is calculated based on the training result of the client that reports the alarm signal is greater than a maximum value of a second actual value that is of the performance of the machine learning model and that is calculated based on a training result of a client that does not report the alarm signal; and
the calculating, by the server, a third value of the parameter based on the training result obtained through screening comprises:
determining, by the server, the third value of the parameter based on the training result that is of the client that reports the alarm signal and that is in the training result obtained through screening.

15. The method according to any one of claims 11 to 13, wherein all of training results of clients that report the alarm signal meet the second condition;
a maximum value of a second actual value that is of the performance of the machine learning model and that is calculated based on the training result of the client that reports the alarm signal is less than a maximum value of a second actual value that is of the performance of the machine learning model and that is calculated based on a training result of a client that does not report the alarm signal; and
the calculating, by the server, a third value of the parameter based on the training result obtained through screening comprises:
determining, by the server, the third value of the parameter based on the training result that is of the client that does not report the alarm signal and that is in the training result obtained through screening.

16. The method according to any one of claims 11 to 13, wherein some of training results of clients that report the alarm signal meet the second condition; and
the calculating, by the server, a third value of the parameter based on the training result obtained through screening comprises:
determining, by the server, the third value of the parameter based on the training result that is of the client that reports the alarm signal and that is in the training result obtained through screening.

17. The method according to any one of claims 9 to 16, wherein the method further comprises:
in M rounds of training comprising the current round of training, if a training result of a third client is not comprised in the training result obtained through screening, obtaining, by the server through screening, the training result only from a training result of another client other than the third client in the plurality of clients in N rounds of training after the current round of training, wherein the third client is any one of the plurality of clients, and both M and N are positive integers.

18. A federated learning apparatus, applied to a federated learning system, wherein the federated learning system comprises a server and a plurality of clients, a same machine learning model is deployed on the plurality of clients, and the federated learning apparatus is comprised in one of the plurality of clients, and comprises:
a receiving unit, configured to receive a first value of a parameter from the server;
a training unit, configured to: when the first value of the parameter does not meet a first condition, perform a current round of training based on the first training data, the machine learning model, and a local value of the parameter, to obtain a training result of the current round of training, wherein the first training data is data reserved on the first client; and
a sending unit, configured to send the training result and alarm information to the server, wherein the alarm information indicates that the first value of the parameter does not meet a requirement.

19. A federated learning apparatus, applied to a federated learning system, wherein the federated learning system comprises a server and a plurality of clients, a same machine learning model is deployed on the plurality of clients, and the federated learning apparatus is comprised in the server, and comprises:
a sending unit, configured to separately send a first value of a parameter to the plurality of clients, wherein the first value of the parameter is used for a current round of training of the machine learning model;
a receiving unit, configured to receive a training result of the current round of training from each of the plurality of clients;
a first determining unit, configured to obtain, by the server when at least one client of the plurality of clients further reports an alarm signal, a training result by screening the training results of the current round of training from the plurality of clients, wherein the alarm information indicates that the first value of the parameter does not meet a first condition; and
a second determining unit, configured to calculate a third value of the parameter based on the training result obtained through screening, wherein the third value of the parameter is used for a next round of training of the machine learning model.

20. A computer device, comprising at least one processor and a memory, wherein the memory stores computer-executable instructions that can be run on the processor, and when the computer-executable instructions are executed by the processor, the processor performs the method according to any one of claims 1 to 8 or the method according to any one of claims 9 to 17.

21. A computer-readable storage medium for storing one or more computer-executable instructions, wherein when the computer-executable instructions are executed by a processor, the processor performs the method according to any one of claims 1 to 17.

22. A federated learning system, comprising a server and a plurality of clients, wherein a same machine learning model is deployed on the plurality of clients;
each client in the plurality of clients is configured to perform the method according to any one of claims 1 to 8; and
the server is configured to perform the method according to any one of claims 9 to 17.
